# EUROPEAN PATENT SPECIFICATION

(11) **EP 4 045 791 B1**
(45) Date of publication and mention of the grant of the patent: **08.11.2023**
(21) Application number: 20828967.8
(22) Date of filing: 09.12.2020
(51) Int. Cl.: F03D 7/04, F03D 17/00

(54) **METHOD AND AN APPARATUS FOR COMPUTER-IMPLEMENTED MONITORING OF A WIND TURBINE**
VERFAHREN UND VORRICHTUNG ZUR COMPUTERIMPLEMENTIERTEN ÜBERWACHUNG EINER WINDTURBINE
PROCÉDÉ ET APPAREIL DE SURVEILLANCE MISE EN OEUVRE PAR ORDINATEUR POUR UNE ÉOLIENNE

(30) Priority: 16.12.2019 EP 19216579
(43) Date of publication of application: 24.08.2022
(73) Proprietor: Siemens Gamesa Renewable Energy A/S, 7330 Brande (DK)
(72) Inventor: GOLLNICK, Bert, 22145 Hamburg (DE)
(74) Representative: SGRE-Association
(86) International application number: PCT/EP2020/085207
(87) International publication number: WO 2021/122194

(56) References cited:
- EP-A1- 2 026 160
- EP-A1- 2 746 885
- EP-A1- 3 453 874
- EP-A2- 2 487 553
- EP-B1- 2 026 160
- CN-A- 106 991 508

## Description

The invention refers to a method and an apparatus for computer-implemented monitoring of a wind turbine.

Wind turbines comprise an upper section with a rotor and a nacelle on the top of a tower, where the upper section can be rotated around the vertical yaw axis in order to vary the yaw angle of the respective turbine. The yaw angle of a wind turbine is usually adjusted such that the rotor of the wind turbine faces the wind. To do so, wind sensors (i.e. anemometers) are installed on the respective wind turbines to estimate the wind direction. The wind turbines are designed to operate in a specific way, called design operation. However, if sensor information is wrong or any other fault of a technical component of the wind turbine occurs, a deviation from design operation is the result. Deviations from the design operation can cause power loss in the production of electric energy and shall be avoided. In addition, deviations from design operation can result from an upcoming or already existing fault of the wind turbine and/or the sensors used to control it.

EP 2 026 160 A1 discloses a method for event monitoring for a wind turbine. The method includes measuring a first signal pattern representing a characteristic selected from a number of characteristics of the wind turbine, measuring a second signal pattern representing a different characteristic from the number of characteristics of the wind turbine, and analyzing the first and the second signal patterns or a combination of the first and the second signal patterns with an analyzing method. The analyzing method provides analyzed data which are evaluated to provide a result indicative for an event. The analyzing method is based on analyzing the signal patterns based on their stability, drift over time, space domain, frequency domains, long-and short-term trend or a combination thereof. The signal patterns are analyzed as a multi-dimensional curve, where signal points can be interpolated in at least two dimensions. The analyzing method may be based on rating or weighting by stability, Fourier-analysis. Short-term trend analysis, mapping to curves, neural net analysis or other self-learning methods, and fuzzy logic.

EP 2 487 553 A2 discloses a method for turbine fault analysis. The method includes collecting a first set of data associated with wind turbine performance, analyzing the first set of data to determine whether the first set of data can indicate a fault condition, and reviewing a second set of data associated with wind turbine performance to determine if a fault condition exists. Analyzing shall be performed by self-organizing feature maps, Principal Component Analysis, or Auto Associative Neural Networks.

It is an object of the present invention to provide an easy method in order to detect deviations from design operation of a wind turbine.

This object is solved by the independent patent claims. Preferred embodiments of the invention are defined in the dependent claims.

The invention provides a method for computer-implemented monitoring of a wind turbine, for example a wind turbine in a wind farm. The wind turbine comprises an upper section on top of a tower, the upper section being pivotable around the vertical yaw axis and having a nacelle and a rotor with rotor blades. The rotor is attached to the nacelle and the rotor blades are rotatable by wind around a substantially horizontal rotor axis. Actually, the rotor axis may be tilted a bit.

According to the method of the invention, the following steps i) to iii) are performed during the operation of the wind turbine or independent from the operation of the wind turbine.

In step i), a plurality of sets of measurement data of at least two measurement variables is obtained from a data storage. The term "obtained" or "obtaining" means that the plurality of sets of measurement data is received by a processing unit implementing the method of the invention. The measurement variables are measurement variables of the wind turbine which have been acquired by one or more first sensors. Alternatively or additionally, the measurement variables may be measurement variables of the environment of the wind turbine which have been acquired by one or more second sensors.

The plurality of sets of measurement data of at least two measurement variables has been acquired at any time in the past and is stored in the data storage for later retrieval. The measurement data of a respective set of a measurement data of the at least two measurement variables is acquired at a same time point in the past. In other words, the measurement data of the at least two measurement variables being part of a respective set of measurement data have been acquired at a same time point in the past. The plurality of sets of measurement data may have been acquired in regular or arbitrary time intervals in the past.

In step ii), the plurality of sets of measurement data of the at least two measurement variables is processed by creating an image suitable for visualization. According to this step, the measurement data are treated as an image.

In step iii), a deviation type from a predetermined operation of the wind turbine is determined by processing the image by a trained data-driven model configured as a convolutional neural network, where the image is fed as a digital input to the trained data-driven model and the trained data-driven model provides the deviation type as a digital output.

The method of the invention provides an easy and straightforward method for determining deviations from design operation of the wind turbine. The deviation type may be used as information for an operator about unusual behavior, e.g. with respect to loss of power production. In addition, the deviation type may be used for control operations of the wind turbine to avoid its operation leading to a failure or malfunction. To do so, a trained data-driven model which is configured as a convolutional neural network is used. This model is trained by training data comprising a plurality of images together with the information about none, one or more deviation types determined in the respective image of the training data. The images result from transforming the plurality of sets of measurement data of the at least two measurement variables into a multidimensional visualization.

The trained data-driven model is a convolutional neural network which is particularly suitable for processing images. Nevertheless, other trained data-driven models may also be implemented in the method of the invention, e.g. models based on decision trees or Support Vector Machines or deep learning.

In a preferred embodiment of the invention, an information based on the deviation type is output via a user interface. E.g., the deviation type itself may be output via the user interface. Alternatively or additionally, a warning may be provided via the user interface in case that the deviation type indicates a potential and/or upcoming failure or malfunction. Thus, a human operator is informed about a deviation from design operation so that he can initiate an appropriate counter measures by adjusting control parameters and/or stopping operation of the wind turbine in order to enhance generated electric power of the wind turbine or avoid damage. Preferably, the user interface comprises a visual user interface but it may also comprise a user interface of another type (e.g. an acoustic user interface).

In another particularly preferred embodiment, the method of the invention may generate control commands for the wind turbine. The control commands may be such that the upper section of the wind turbine may be rotated around its corresponding yaw axis to adjust a yaw angle. This embodiment enables an automatic alignment of the wind turbine to reduce power loss due to a yaw misalignment. The control commands may be such that operation of the wind turbine is stopped. This embodiment enables an automatic stop of the wind turbine to avoid potential damage.

The image suitable for visualization is created by transforming the plurality of sets of measurement data of the at least two measurement variables into a multidimensional diagram. The image may be a two or multidimensional image. In such an image, each set of measurement data is depicted by a mark (indicated, for example, by a cross, circle, block, and so on). The image may be, for example, a grey-colored image with a background in black or white. For example, the image may have two or three axes for a respective measurement variable where an additional measurement variable may be color-coded in grey. As the background is black or white, no specific color is assigned to those parts in the image where no measurement data is depicted. Alternatively, the image may be a colored image where a color enables visualization of a further measurement variable in addition to those measurement variables plotted over the axes.

In another preferred embodiment, transforming the plurality of sets of measurement data of the at least two measurement variables into the image comprises adding a reference graph characterizing and/or visualizing a predetermined operation of the wind turbine. The reference graph enables, in particular for a human operator, an easy comparison whether the measurement data comprises a deviation from design operation or not. The farther the measurement data is away from the reference graph, the more likely a deviation from design operation exists.

In another preferred embodiment, the plurality of sets of measurement data of the at least two measurement variables processed for transformation into the image is dependent on the failure type and in particular greater than 1000. The bigger the amount of sets of measurement data is, the more information is present in the image for the determination of a deviation from design operation. The number of sets of measurement data used for processing in the method described may result from measurements over a long time period, for example, a day, a week, several weeks, a month and so on.

To reduce the amount of sets of measurement data being processed for transformation into the image, the plurality of sets of measurement data of the at least two measurement variables may be filtered to exclude, for example, periods of maintenance and/or downtimes. The measurement data can already be stored as filtered data. However, filtering of the measurement data to exclude unwanted periods of time, such as maintenance and/or downtimes, may be done after obtaining the measurement data by the processing unit and before proceeding the step of creating the image suitable for visualization. Alternatively or in addition, the measurement data of a respective measurement variable may be stored as filtered data, for example as a mean of a measurement interval lasting for one or more minutes, for example ten minutes.

Besides the above method, the invention refers to an apparatus for computer-implemented monitoring of a wind turbine, where the apparatus is configured to perform the method according to the invention or one or more preferred embodiments of the method according to the invention.

Moreover, the invention refers to a computer-program product with a program code, which is stored on a non-transitory machine-readable carrier, for carrying out the method according to the invention or one or more preferred embodiments thereof when the program code is executed on a computer.

Furthermore, the invention refers to a computer-program with a program code for carrying out the method according to the invention or one or more preferred embodiments thereof when the program code is executed on a computer.

An embodiment of the invention will now be described in detail with respect to the accompanying drawing.
- Fig. 1: is a schematic illustration of a wind turbine comprising a controller for performing an embodiment of the invention;
- Fig. 2: is a two-dimensional diagram visualizing a plurality of sets of measurement data of a wind turbine together with a reference graph characterizing a predetermined operation of the wind turbine, wherein the wind turbine operates within design operation;
- Fig. 3: is another two-dimensional diagram visualizing a plurality of sets of measurement data of a wind turbine together with a reference graph characterizing a predetermined operation of the wind turbine, wherein the measurement data comprises a number of deviations from design operation; and
- Fig. 4: is another two-dimensional diagram visualizing a plurality of sets of measurement data of a wind turbine without a reference graph, wherein the measurement data comprises a number of deviations from design operation.

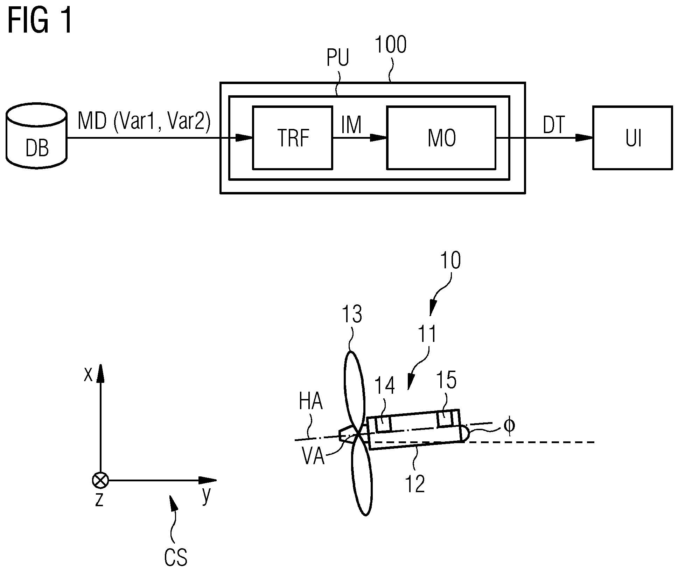

Fig. 1 shows in a lower part a wind turbine 10. The wind turbine 10 may be part of a wind farm or may be a single turbine. The method described herein may be applied to a single wind turbine and to wind turbines in wind farms as well.

The wind turbine 10 is shown in a plane view from above. A 3D coordinate system CS for indicating the spatial arrangement of the wind turbine 10 is part of Fig. 1. The vertical direction is indicated by the z-axis of the coordinate system CS whereas the directions parallel to the horizontal directions are indicated by the x-axis and y-axis of the coordinate system CS. The wind direction is along the y-axis of the coordinate system CS.

The wind turbine 10 comprises an upper section 11 being located on top of a tower (not shown) which extends in the vertical z-direction. The upper section comprises a nacelle 12 accommodating an electric generator for generating electricity. Furthermore, the upper section 11 comprises a rotor 13 having three rotor blades with an angle of 120° therebetween where Fig. 1 only shows two of those blades. The rotor 13 is rotated around a substantially horizontal rotor axis HA by wind resulting in the generation of electricity by the generator within the nacelle 12. The upper section 11 of the turbine 10 can be pivoted around the vertical yaw axis VA.

The turbine 10 is equipped with a number of not shown other sensors 14 (being a first sensor) for determining operating parameters of the turbine such as rotor values (rotor speed, rotor acceleration, rotor azimuth), blade pitch values (pitch angle, pitch speed), blade root moment, produced power and/or torque. Besides the sensor 14, a second sensor 15 may be installed at or nearby the wind turbine 10. The sensor 15 which can consist of a number of different sensors is adapted to determine environmental parameters, such as wind speed, wind direction, turbulence intensity, air density, outside temperature and so on. In addition, further sensors may be provided to determine further information, such as outside temperature, air pressure and so on.

The wind turbine 10 is equipped with a controller which aims to keep the wind turbine within design operation. The method as described in the following provides an easy method to detect deviations from design operation. To do so, the wind turbine 10 acquires, by means of the sensors 14, 15, measurement data MD of two or more measurement variables Var1, Var2 and stores them in a database. The acquisition of the measurement data of the different measurement variables preferably takes place periodically, such as every minute, every ten minutes or every 15 minutes. If the processor and the sensors 14, 15 are adapted to acquire the measurement data of the measurement variables in a shorter time interval, filtering of the measurement data of a respective measurement variable may be made and the filtered measurement data may be stored in the data storage DB. As measurement variables Var1, Var2, for example, produced power, torque, rotor speed and so on are acquired. However, in the database any kind of measurement data may be stored.

Measurement data (values) of different measurement variables Var1, Var2 which are acquired at the same time are assigned with a same timestamp and denoted as set of measurement data MD. The data storage DB may be a database consisting of table having a plurality of columns (consisting of the timestamp, the number of measurement variables Var1, Var2, ...) where each line represents a set of measurement data MD being acquired at the same time.

To detect a deviation from a design operation, i.e. a predetermined operation of the wind turbine as guaranteed by the manufacturer of the wind turbine, a plurality of sets of measurement data MD consisting of the at least two measurement variables Var1, Var2 is obtained from the data storage DB. The sets of measurement data MD are transferred by a suitable communication link to a controller 100. The controller 100 may be a controller of the wind turbine 10 or an external computer for supervising operation of the wind turbine 10. The controller 100 comprises a processing unit PU with a transformation unit TRF to transform the plurality of sets of measurement data MD into an image IM and for implementing a trained data-driven model MO receiving a respective image IM as a digital input and providing a deviation type DT (DT1, DT2, DT3, ...) as a digital output.

The trained data-driven model MO is based on a convolutional neural network having been learnt beforehand by training data. The training data comprise a plurality of images IM together with the information of none, one or more deviation types DT1, DT2, DT3 occurring in the respective image IM. Convolutional neural networks are well-known from the prior art and particularly suitable for processing digital images. Convolutional neural network comprise convolutional layers followed by pooling layers as well as fully connected layers in order to determine at least one property of the respective image where the property according to the invention is one or more deviation types DT1, DT2, DT3, ....

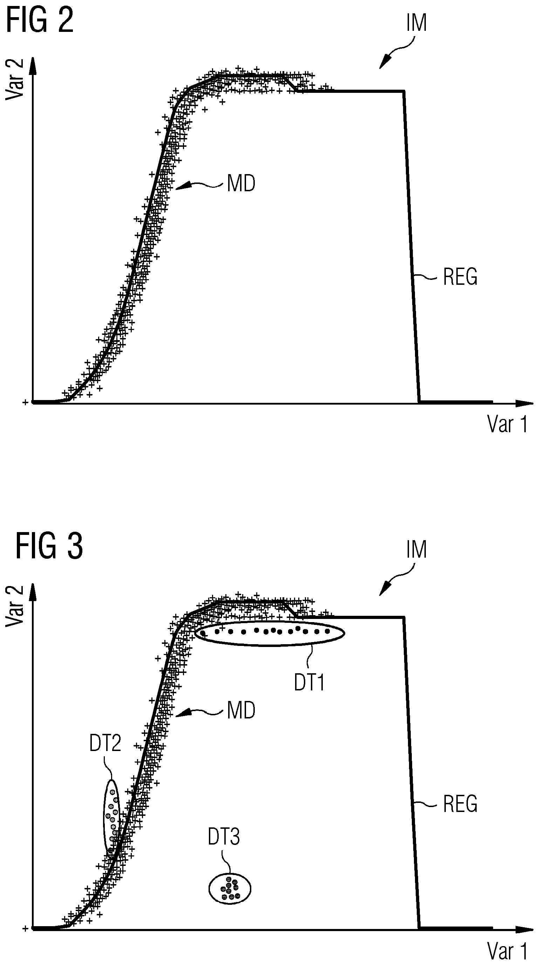

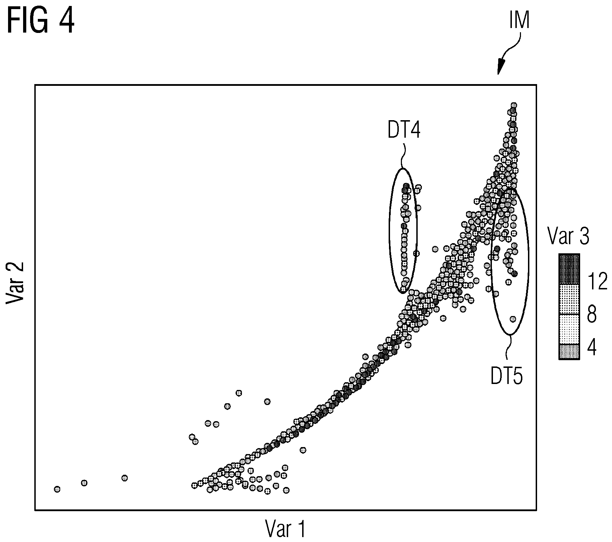

Figs. 2 to 4 show different embodiments of a multidimensional diagram in which a plurality of sets of measurement data MD of two (Figs. 2 and 3) or three (Fig. 4) has been transformed into an image IM.

In examples of Figs. 2 and 3, variable Var1 corresponds to, for example, wind speed. Variable Var2 corresponds to, for example, produced electricity. Each point in the diagram depicted in grey color represents a set of measurement data MD, i.e. a pair of values of corresponding wind speed and produced electricity. Together with the sets of measurement data MD consisting of, in particular, more than 1000 sets of measurement data MD having been acquired in the past over a time period, for example, a month, a reference graph REG indicating a warranted power from the manufacturer of the turbine is shown.

As can be seen from Fig. 2, the plurality of sets of measurement data MD and the reference graph REG correspond to each other, i.e. the wind turbine 10 operates within design operation. In the embodiment of Fig. 3 three different deviation types DT1, DT2, DT3 indicated by a respective ellipse are shown in the image. Generally, a power curve can have several deviations such as speed calibration errors, power boost, unexplained curtailment (denoted in Fig. 3 as deviation type DT1), faulty anemometer (denoted in Fig. 3 as deviation type DT2), faulty cluster of points (denoted in Fig. 3 as deviation type DT3), no data, and so on.

In the images of Figs. 2 and 3, the background containing neither measurement data MD nor the reference graph RFG is depicted with no color, i.e. in black or white. In this way, the reference graph REG is distinguishing from the measurement data MD.

In the example of Fig. 4, another image resulting from a transformation of a plurality of sets of measurement data MD of three measurement variables Var1, Var2, Var3 is illustrated. Measurement variable Var1 corresponds to a rotor speed and measurement variable Var2 corresponds to the active power or torque of the wind turbine. The third measurement variable Var3 corresponds to the ambient temperature and may be visualized in the image IM by color coding, i.e. the point of values resulting from measurement variables Var1 (rotor speed), Var2 (active power or torque) has the color according to the ambient temperature (Var3) as indicated by the color gradient on the right hand side. In case that a further measurement variable is to be visualized in the image IM, the size of the measurement data points may be chosen in different sizes. By way of example only, two deviation types DT4 and DT5 in the form of vertical series of points are illustrated in Fig. 4. They may be unexpected deviations and require further analysis by a human operator.

In the embodiment of Fig. 1, the deviation type DT (as a general denotation for the different deviation type DT1, ..., DT5) produced as an output of the model MO results in an output on a user interface UI which is shown only schematically. Preferably, the user interface UI comprises a display. The user interface provides information for a human operator. The output based on the deviation type DT may be the deviation type itself so that the operator is informed about the kind of deviation. Alternatively or additionally, the output may be a warning in case that the deviation type of a specific type which might cause damage to the wind turbine.

The deviation type DT determined by the model MO may also result in control commands which are provided to the wind turbine 10 in order to adjust, for example, the yaw angle, or to shut the wind turbine down. In this case, the controller 100 enables an automatic adjustment or shutdown of the wind turbine to avoid further damage.

The invention as described in the foregoing has several advantages. Particularly, an easy and straightforward method in order to detect deviations from design operations is provided. To do so, measurement data collected in the past is processed and transformed into an image in order to determine the deviation type via a suitably trained data-driven model configured as a convolutional neural network. The formalization of a specific failure type is simpler than classical engineering techniques. The process is fast as a domain expert only needs to classify training images correctly. The method provides consistent results as the same image will lead to the same prediction.

## Claims

1. A method for computer-implemented monitoring of a wind turbine comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), comprising the steps of:
i) obtaining, from a data storage (BD), a plurality of sets of measurement data (MD) of at least two measurement variables (Var1, Var2), the measurement variables (Var1, Var2) being measurement variables of the wind turbine (10), acquired by one or more first sensors (14), and/or the environment of the wind turbine (10), acquired by one or more second sensors (15), and the measurement data (MD) of a respective set of measurement data being acquired at a same time point in the past;
ii) processing the plurality of sets of measurement data (MD) of the at least two measurement variables (Var1, Var2) by creating an image (IM) suitable for visualization;
iii) determining a deviation type (DT1, DT2, DT3) from a predetermined operation of the wind turbine by processing the image (IM) by a trained data-driven model (MO) configured as a convolutional neural network, where the image (IM) is fed as a digital input to the trained data-driven model (MO) and the trained data-driven model (MO) provides the deviation type (DT1, DT2, DT3) as a digital output.

2. The method according to claim 1, wherein an information based on the deviation type (DT1, DT2, DT3) is output via a user interface (UI).

3. The method according to one of the preceding claims, wherein control commands are generated for the wind turbine (10) .

4. The method according to one of the preceding claims, wherein transforming the plurality of sets of measurement data (MD) of the at least two measurement variables (Var1, Var2) into the image (IM) comprises adding a reference graph (REG) characterizing and/or visualizing a predetermined operation of the wind turbine (10).

5. The method according to one of the preceding claims, wherein the plurality of sets of measurement data (MD) of the at least two measurement variables (Var1, Var2) processed for transformation into the image (IM) is dependent on the failure type and in particular greater than 1000.

6. The method according to one of the preceding claims, wherein the plurality of sets of measurement data (MD) of the at least two measurement variables (Var1, Var2) is filtered to exclude periods of maintenance and/or downtimes.

7. An apparatus for computer-implemented monitoring of a wind turbine comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein the apparatus (100) comprises a processing unit (PU) configured to perform the following steps:
i) obtaining, from a data storage (BD), a plurality of sets of measurement data (MD) of at least two measurement variables (Var1, Var2), the measurement variables (Var1, Var2) being measurement variables of the wind turbine (10), acquired by one or more first sensors (14), and/or the environment of the wind turbine (10), acquired by one or more second sensors (15), and the measurement data (MD) of a respective set of measurement data being acquired at a same time point in the past;
ii) processing the plurality of sets of measurement data (MD) of the at least two measurement variables (Var1, Var2) by creating an image (IM);
iii) determining a deviation type (DT1, DT2, DT3) from a predetermined operation of the wind turbine by processing the image (IM) by a trained data driven model (MO) configured as a convolutional neural network, where the image (IM) is fed as a digital input to the trained data driven model (MO) and the trained data driven model (MO) provides the deviation type (DT1, DT2, DT3) as a digital output.

8. The apparatus according to claim 7, wherein the apparatus (100) is configured to perform a method according to one of claims 2 to 6.

9. A wind turbine (10) comprising an upper section (11) on top of a tower, the upper section (11) being pivotable around a vertical yaw axis (VA) and having a nacelle (12) and a rotor (13) with rotor blades, the rotor (13) being attached to the nacelle (12) and the rotor blades being rotatable by wind around a substantially horizontal rotor axis (HA), wherein the wind turbine (10) comprises an apparatus (100) according to claim 7 or 8.

10. A computer program product with program code, which is stored on a non-transitory machine-readable carrier, for carrying out a method according to one of claims 1 to 6 when the program code is executed on a computer.

## Patentansprüche

1. Verfahren zum computerimplementierten Überwachen einer Windturbine, die einen oberen Teil (11) an der Spitze eines Turms umfasst, wobei der obere Teil (11) um eine vertikale Gierachse (VA) schwenkbar ist und ein Maschinenhaus (12) und einen Rotor (13) mit Rotorblättern aufweist, wobei der Rotor (13) an dem Maschinenhaus (12) angebracht ist und die Rotorblätter durch Wind um eine im Wesentlichen horizontale Rotorachse (HA) drehbar sind, die folgenden Schritte umfassend:
i) Beziehen einer Mehrzahl von Sätzen von Messdaten (MD) mindestens zweier Messvariablen (Var1, Var2) von einem Datenspeicher (BD), wobei die Messvariablen (Var1, Var2) Messvariablen der Windturbine (10) sind, die von einem oder mehreren ersten Sensoren (14) erfasst wurden, und/oder der Umgebung der Windturbine (10), die von einem oder mehreren zweiten Sensoren (15) erfasst wurden, und die Messdaten (MD) eines jeweiligen Satzes von Messdaten zu einem gleichen Zeitpunkt in der Vergangenheit erfasst wurden,
ii) Verarbeiten der Mehrzahl von Sätzen von Messdaten (MD) der mindestens zwei Messvariablen (Var1, Var2) durch Erstellen eines Abbildes (IM), das zur Visualisierung geeignet ist,
iii) Bestimmen einer Art der Abweichung (DT1, DT2, DT3) von einem festgelegten Betrieb der Windturbine durch Verarbeiten des Abbildes (IM) durch ein trainiertes datengestütztes Modell (MO), das als faltungsneuronales Netzwerk (Convolutional Neural Network) gestaltet ist, wobei das Abbild (IM) als digitale Eingabe in das trainierte datengestützte Modell (MO) gespeist wird und das trainierte datengestützte Modell (MO) die Art der Abweichung (DT1, DT2, DT3) als digitale Ausgabe bereitstellt.

2. Verfahren nach Anspruch 1, wobei eine Information basierend auf der Art der Abweichung (DT1, DT2, DT3) über eine Benutzerschnittstelle (UI) ausgegeben wird.

3. Verfahren nach einem der vorhergehenden Ansprüche, wobei Steuerbefehle für die Windturbine (10) erzeugt werden.

4. Verfahren nach einem der vorhergehenden Ansprüche, wobei das Umwandeln der Mehrzahl von Sätzen von Messdaten (MD) der mindestens zwei Messvariablen (Var1, Var2) in das Abbild (IM) das Hinzufügen einer Referenzkurve (REG) umfasst, die einen festgelegten Betrieb der Windturbine (10) kennzeichnet und/oder visualisiert.

5. Verfahren nach einem der vorhergehenden Ansprüche, wobei die Mehrzahl von Sätzen von Messdaten (MD) der mindestens zwei Messvariablen (Var1, Var2), die zur Umwandlung in das Abbild (IM) verarbeitet wird, von der Art des Fehlers abhängt und insbesondere größer als 1000 ist.

6. Verfahren nach einem der vorhergehenden Ansprüche, wobei die Mehrzahl von Sätzen von Messdaten (MD) der mindestens zwei Messvariablen (Var1, Var2) gefiltert wird, um Zeiten der Wartung und/oder Stillstandzeiten auszuschließen.

7. Vorrichtung zum computerimplementierten Überwachen einer Windturbine, die einen oberen Teil (11) an der Spitze eines Turms umfasst, wobei der obere Teil (11) um eine vertikale Gierachse (VA) schwenkbar ist und ein Maschinenhaus (12) und einen Rotor (13) mit Rotorblättern aufweist, wobei der Rotor (13) an dem Maschinenhaus (12) angebracht ist und die Rotorblätter durch Wind um eine im Wesentlichen horizontale Rotorachse (HA) drehbar sind, wobei die Vorrichtung (100) eine Verarbeitungseinheit (PU) umfasst, die dafür gestaltet ist, die folgenden Schritte durchzuführen:
i) Beziehen einer Mehrzahl von Sätzen von Messdaten (MD) mindestens zweier Messvariablen (Var1, Var2) von einem Datenspeicher (BD), wobei die Messvariablen (Var1, Var2) Messvariablen der Windturbine (10) sind, die von einem oder mehreren ersten Sensoren (14) erfasst wurden, und/oder der Umgebung der Windturbine (10), die von einem oder mehreren zweiten Sensoren (15) erfasst wurden, und die Messdaten (MD) eines jeweiligen Satzes von Messdaten zu einem gleichen Zeitpunkt in der Vergangenheit erfasst wurden,
ii) Verarbeiten der Mehrzahl von Sätzen von Messdaten (MD) der mindestens zwei Messvariablen (Var1, Var2) durch Erstellen eines Abbildes (IM),
iii) Bestimmen einer Art der Abweichung (DT1, DT2, DT3) von einem festgelegten Betrieb der Windturbine durch Verarbeiten des Abbildes (IM) durch ein trainiertes datengestütztes Modell (MO), das als faltungsneuronales Netzwerk (Convolutional Neural Network) gestaltet ist, wobei das Abbild (IM) als digitale Eingabe in das trainierte datengestützte Modell (MO) gespeist wird und das trainierte datengestützte Modell (MO) die Art der Abweichung (DT1, DT2, DT3) als digitale Ausgabe bereitstellt.

8. Vorrichtung nach Anspruch 7, wobei die Vorrichtung (100) dafür gestaltet ist, ein Verfahren nach einem der Ansprüche 2 bis 6 durchzuführen.

9. Windturbine (10), einen oberen Teil (11) an der Spitze eines Turms umfassend, wobei der obere Teil (11) um eine vertikale Gierachse (VA) schwenkbar ist und ein Maschinenhaus (12) und einen Rotor (13) mit Rotorblättern aufweist, wobei der Rotor (13) an dem Maschinenhaus (12) angebracht ist und die Rotorblätter durch Wind um eine im Wesentlichen horizontale Rotorachse (HA) drehbar sind, wobei die Windturbine (10) eine Vorrichtung (100) nach Anspruch 7 oder 8 umfasst.

10. Computerprogrammprodukt mit Programmcode, der auf einem nicht-flüchtigen maschinenlesbaren Träger gespeichert ist, zum Ausführen eines Verfahrens nach einem der Ansprüche 1 bis 6, wenn der Programmcode auf einem Computer ausgeführt wird.

## Revendications

1. Procédé pour une surveillance mise en oeuvre par ordinateur d'une éolienne comprenant une section supérieure (11) au sommet d'une tour, la section supérieure (11) pouvant pivoter autour d'un axe de lacet vertical (VA) et présentant une nacelle (12) et un rotor (13) équipé de pales de rotor, le rotor (13) étant fixé à la nacelle (12) et les pales de rotor pouvant tourner sous l'effet du vent autour d'un axe de rotor sensiblement horizontal (HA), le procédé comprenant les étapes ci-dessous consistant à :
i) obtenir, à partir d'un magasin de stockage de données (BD), une pluralité d'ensembles de données de mesure (MD) d'au moins deux variables de mesure (Var1, Var2), les variables de mesure (Var1, Var2) étant des variables de mesure de l'éolienne (10), acquises par un ou plusieurs premiers capteurs (14), et/ou de l'environnement de l'éolienne (10), acquises par un ou plusieurs seconds capteurs (15), et les données de mesure (MD) d'un ensemble respectif de données de mesure étant acquises à un même instant dans le passé ;
ii) traiter la pluralité d'ensembles de données de mesure (MD) desdites au moins deux variables de mesure (Var1, Var2) en créant une image (IM) pertinente à des fins de visualisation ; et
iii) déterminer un type d'écart (DT1, DT2, DT3) par rapport à un fonctionnement prédéterminé de l'éolienne, en traitant l'image (IM) à l'aide d'un modèle piloté par des données entraîné (MO), configuré sous la forme d'un réseau de neurones convolutif, où l'image (IM) est introduite en tant qu'une entrée numérique dans le modèle piloté par des données entraîné (MO) et le modèle piloté par des données entraîné (MO) fournit le type d'écart (DT1, DT2, DT3) en tant qu'une sortie numérique.

2. Procédé selon la revendication 1, dans lequel des informations basées sur le type d'écart (DT1, DT2, DT3) sont fournies en sortie par l'intermédiaire d'une interface utilisateur (UI).

3. Procédé selon l'une quelconque des revendications précédentes, dans lequel des instructions de commande sont générées pour l'éolienne (10).

4. Procédé selon l'une quelconque des revendications précédentes, dans lequel l'étape de transformation de la pluralité d'ensembles de données de mesure (MD) desdites au moins deux variables de mesure (Var1, Var2) en l'image (IM) comprend l'étape consistant à ajouter un graphe de référence (REG) caractérisant et/ou visualisant un fonctionnement prédéterminé de l'éolienne (10).

5. Procédé selon l'une quelconque des revendications précédentes, dans lequel la pluralité d'ensembles de données de mesure (MD) desdites au moins deux variables de mesure (Var1, Var2), traitée en vue d'une transformation en l'image (IM), est fonction du type de défaillance et est en particulier supérieure à 1000.

6. Procédé selon l'une quelconque des revendications précédentes, dans lequel la pluralité d'ensembles de données de mesure (MD) desdites au moins deux variables de mesure (Var1, Var2) est filtrée pour exclure des périodes de maintenance et/ou des temps d'arrêt.

7. Appareil pour une surveillance mise en oeuvre par ordinateur d'une éolienne comprenant une section supérieure (11) au sommet d'une tour, la section supérieure (11) pouvant pivoter autour d'un axe de lacet vertical (VA) et présentant une nacelle (12) et un rotor (13) équipé de pales de rotor, le rotor (13) étant fixé à la nacelle (12) et les pales de rotor pouvant tourner sous l'effet du vent autour d'un axe de rotor sensiblement horizontal (HA), dans lequel l'appareil (100) comprend une unité de traitement (PU) configurée de manière à mettre en oeuvre les étapes ci-dessous consistant à :
i) obtenir, à partir d'un magasin de stockage de données (BD), une pluralité d'ensembles de données de mesure (MD) d'au moins deux variables de mesure (Var1, Var2), les variables de mesure (Var1, Var2) étant des variables de mesure de l'éolienne (10), acquises par un ou plusieurs premiers capteurs (14), et/ou de l'environnement de l'éolienne (10), acquises par un ou plusieurs seconds capteurs (15), et les données de mesure (MD) d'un ensemble respectif de données de mesure étant acquises à un même instant dans le passé ;
ii) traiter la pluralité d'ensembles de données de mesure (MD) desdites au moins deux variables de mesure (Var1, Var2) en créant une image (IM) ; et
iii) déterminer un type d'écart (DT1, DT2, DT3) par rapport à un fonctionnement prédéterminé de l'éolienne, en traitant l'image (IM) à l'aide d'un modèle piloté par des données entraîné (MO), configuré sous la forme d'un réseau de neurones convolutif, où l'image (IM) est introduite en tant qu'une entrée numérique dans le modèle piloté par des données entraîné (MO) et le modèle piloté par des données entraîné (MO) fournit le type d'écart (DT1, DT2, DT3) en tant qu'une sortie numérique.

8. Appareil selon la revendication 7, dans lequel l'appareil (100) est configuré de manière à mettre en oeuvre un procédé selon l'une quelconque des revendications 2 à 6.

9. Éolienne (10) comprenant une section supérieure (11) au sommet d'une tour, la section supérieure (11) pouvant pivoter autour d'un axe de lacet vertical (VA) et présentant une nacelle (12) et un rotor (13) équipé de pales de rotor, le rotor (13) étant fixé à la nacelle (12) et les pales de rotor pouvant tourner sous l'effet du vent autour d'un axe de rotor sensiblement horizontal (HA), dans laquelle l'éolienne (10) comprend un appareil (100) selon la revendication 7 ou 8.

10. Produit-programme informatique comportant un code de programme, qui est stocké sur un support non transitoire lisible par machine, pour mettre en oeuvre un procédé selon l'une quelconque des revendications 1 à 6 lorsque le code de programme est exécuté sur un ordinateur.
